# EUROPEAN PATENT SPECIFICATION

(11) **EP 1 780 936 B1**
(45) Date of publication and mention of the grant of the patent: **15.05.2013**
(21) Application number: 04771924.0
(22) Date of filing: 20.08.2004
(51) Int. Cl.: H04L 9/32

(54) **TERMINAL APPARATUS**
ENDGERÄTEVORRICHTUNG
APPAREIL DE TERMINAL

(43) Date of publication of application: 02.05.2007
(73) Proprietor: MITSUBISHI ELECTRIC CORPORATION, Chiyoda-ku Tokyo 100-8310 (JP)
(72) Inventor: YONEDA, Takeshi c/o MITSUBISHI ELECTRIC CORPORATION, Tokyo 100-8310 (JP)
(74) Representative: Pfenning, Meinig & Partner GbR
(86) International application number: PCT/JP2004/011963
(87) International publication number: WO 2006/018889

(56) References cited:
- EP-A2- 1 308 821
- JP-A- 2001 211 169
- US-A1- 2002 169 954
- US-B1- 6 539 093
- US-B1- 6 539 093

## Description

### Technical Field

The present invention relates to a terminal device. An authentication device, an encryption communication method and a certificate providing method which show parts of the invention are also described in this description.

### Background Art

Online shopping using the Internet has become popular. Purchasing process of merchandises in the online shopping is realized by a browser and a server communicating with each other via the Internet. Prevention of impersonation of servers, eavesdropping and tampering of communication data is an essential requirement for the online shopping. An encryption communication method SSL (Secure Socket Layer) as shown in a non-patent literature 1 is widely used as a technique to meet the requirement.

In online shopping using SSL, user authentication is often realized by inputting user names and passwords. In that case, it is necessary to choose passwords that are uneasy to guess to prevent impersonation. However, many users tend to choose easily guessable passwords. Therefore, there are growing needs of a digital signature to be used in user authentication. A user authentication function using a digital signature is incorporated in SSL, and impersonation is difficult as far as a digital signature is concerned unless a private key used to generate it is stolen. Private keys for use in digital signatures and certificates for verifying the digital signatures are stored in devices having mechanisms to prevent leakage of private keys, such as an IC (Integrated Circuit) card, a USB (Universal Serial Bus) token, or a UIM (User Identity Module). A device for use in user authentication holding a private key and a certificate corresponding to the private key (hereafter, user certificate) is hereinafter referred to as an authentication device. The authentication device is expected to hold a plurality of private keys and user certificates in the future. This is because, in the case where private keys and certificates to be used are different for each site, it is more convenient to have each of them contained on a single authentication device rather than on different authentication devices.
Non-patent literature 1: Alan O. Freier, and two other persons, "The SSL Protocol Version 3.0," (online), November 18, 1996, Netscape Communications, (Searched on August 2, 2004), the Internet <URL: http://wp.netscape.com/eng/ss13/draft302.txt>
The prior art US 6,539,093 B1 describes an end-user terminal including a browser with a key ring organizer (KRO) plug-in module and a KRO managing a set of key rings, wherein each key ring may contain multiple keys. The key rings can be of any type, including smart cards or remote files. A catalogue (typically in form of a file) contains a set of entries in which each entry contains a set of attributes and a reference to a key record stored in a key ring. Public key data is stored during key generation and later verified against the certificate to be stored in a key ring in order to maintain the integrity of an association. Client-server sessions can be initiated, wherein KRO messages are sent to generate, store and select role based keys for signing documents or authenticating end-users. Different entities such as a web based secure server, an end-user terminal with the KRO, a smart card, an authority terminal and an organization server, which are inter-connected, are shown. Between these entities, digital certificates in encrypted form and keys are exchanged in different types of processes.
Furthermore, US 2002/0169954 Al describes an e-mail firewall applying policies to e-mail messages. The e-mail firewall includes a plurality of mail transfer relay modules transferring e-mail messages between a first side and a second side. Policy managers are used to enforce and ad minister selectable policies. The e-mail firewalle employs signature verification processes to verify signatures in received encrypted e-mail messages. Also external servers can be employed for verifying signatures.

### Disclosure of the Invention

### Problems to be Solved by the Invention

In SSL, an SSL server transmits a transmission request of a user certificate (Certificate Request) to an SSL client. At that time, information of a type of the user certificate (a type of a public algorithm, etc.), or a name of a certificate issuing authority of the user certificate can be designated in the transmission request of the certificate. When the SSL client holds a plurality of user certificates, it searches for a user certificate matching the type of the certificate and the name of the certificate issuing authority in the transmitted certificate transmission request. If a plurality of user certificates match the conditions, there is a need to make a user select a certificate to be used. In addition, the number of candidates for available user certificates increases as the number of the private keys and the user certificates stored in the authentication device increases. As a result, the burden of selecting an appropriate certificate from the candidates for a user becomes heavier.

It is one of the purposes of the present invention to, at the time an application uses a user certificate, decrease the number of candidates for available certificates, and to reduce the burden of selecting a certificate for a user.

### Means to Solve the Problems

The present invention describes: A terminal device for performing an encryption communication using an electronic certificate, the terminal device comprising:
An authentication device connecting unit adapted to connect to a first authentication device storing one or more electronic certificates and a use condition including, for each of the one or more electronic certificates, identification information for uniquely identifying the electronic certificate and a condition value of a condition item for determining whether to use the electronic certificate, where the condition value is determined as matching a current value of the condition item when the current value is the condition value,
and to connect to a second authentication device storing a further electronic certificate and further identification information for uniquely identifying said further electronic certificate but no use condition;
a use condition receiving unit adapted to receive the use condition from the first authentication device, whereto the authentication device connecting unit connects, and to receive no use condition from the second authentication device, whereto the authentication device connecting unit connects;
a use condition storing unit adapted to, when the use condition is received by the use condition receiving unit from the first authentication device, store the received use condition, and to, when no use condition is received by the use condition receiving unit from the second authentication device, store a predetermined use condition including the further identication information and a condition value of the condition item set to a default,
where the default matches the current value except if the current value is undesignated;
a certificate selecting unit adapted to select the certificates with a condition value matching the current value based on the use conditions stored in the use condition storing unit;
an output unit adapted to output, if a plurality of certificates has been selected by the certificate selecting unit, identification information for uniquely identifying the electronic certificates selected by the certificate selecting unit;
an input information unit adapted to make a user select identification information output by the output unit;
a certificate receiving unit adapted to receive the electronic certificate, selected by the certificate selecting unit when the certificate selecting units selects a single certificate and
corresponding to the identification information selected by the user otherwise, from the authentication device storing said electronic certificate, whereto the authentication device connecting unit connects; and
a communication unit adapted to perform an encryption communication by using the electronic certificate received by the certificate receiving unit,
wherein the terminal device is adapted to establish a communication channel with a server, to share with the server a session key securely, to transmit the electronic certificate received by the certificate receiving unit to the server and, after a verification of the electronic certificate by the server, to perform the encryption communication with the server using the shared session key.

The terminal device according to the invention therefore especially includes:
an output unit to output identification information for uniquely identifying the electronic certificate selected by the certificate selecting unit; and
an input unit to make a user select the identification information output by the output unit, wherein
in the terminal device, the certificate receiving unit receives an electronic certificate corresponding to the identification information that the input unit makes the user select, from the authentication device, whereto the authentication device connecting unit connects.

In the terminal device, the certificate selecting unit can compare the use condition stored in the use condition storing unit with information about a destination of the encryption communication by the communication unit, based on a result of which, the certificate selecting unit can select an electronic certificate.

In the terminal device, the certificate selecting unit can use at least a host name of the destination of the encryption communication as the information about the destination of the encryption communication by the communication unit.

The terminal device can further include a control unit to execute a program using the encryption communication performed by the communication unit, and in the terminal device, the certificate selecting unit can compare the use condition stored in the use condition storing unit with information about the program executed by the control unit, based on a result of which, the certificate selecting unit can select an electronic certificate.

In the terminal device, the certificate selecting unit can use at least a name of the program as the information about the program executed by the control unit.

In the terminal device, the authentication device connecting unit can connect to a plurality of authentication devices simultaneously.

In the terminal device, the authentication device connecting unit can connect simultaneously to an authentication device for storing one or more electronic certificates and a use condition for limiting a use of each of the one or more electronic certificates, and an authentication device for storing one or more electronic certificates but no use condition;
the use condition receiving unit does not receive a use condition from the authentication device for storing no use condition; and
the use condition storing unit can store a predetermined use condition when the use condition receiving unit does not receive a use condition.

The terminal device can further include a use condition obtaining unit to obtain a use condition for the electronic certificate used in the encryption communication by the communication unit, from a destination of the encryption communication, and
in the terminal device, the use condition storing unit can store the use condition obtained by the use condition obtaining unit, in addition to the use condition received by the use condition receiving unit.

In the terminal device, the use condition obtaining unit can obtain, as the use condition, at least a name of a certificate issuing authority that issues the electronic certificate used in the encryption communication by the communication unit.

Further, an authentication device showing parts of the invention may include:
a terminal device connecting unit to connect to a terminal device for performing an encryption communication using an electronic certificate;
a certificate storing unit to store one or more electronic certificates;
a use condition storing unit to store a use condition for limiting a use of each of the one or more electronic certificates stored in the certificate storing unit;
a use condition transmitting unit to transmit the use condition stored in the use condition storing unit to the terminal device, whereto the terminal device connecting unit connects; and
a certificate transmitting unit to transmit the one or more electronic certificates stored in the certificate storing unit to the terminal device, whereto the terminal device connecting unit connects.

In the authentication device, the use condition storing unit stores the use condition for limiting the use of each of the one or more electronic certificates stored in the certificate storing unit by using information about a destination of the encryption communication by the terminal device, whereto the terminal device connecting unit connects.

In the authentication device, the use condition storing unit uses at least a host name of the destination of the encryption communication as the information about the destination of the encryption communication by the terminal device, whereto the terminal device connecting unit connects.

In the authentication device, the use condition storing unit stores the use condition for limiting the use of each of the one or more electronic certificates stored in the certificate storing unit by using information about a program executed by the terminal device, whereto the terminal device connecting unit connects.

In the authentication device, the use condition storing unit uses at least a name of the program as the information about the program executed by the terminal device, whereto the terminal device connecting unit connects.

Further, an encryption communication method showing parts of the invention may use a terminal device for performing an encryption communication using an electronic certificate, and the encryption communication method may include:
connecting to an authentication device for storing one or more electronic certificates, and a use condition for limiting a use of each of the one or more electronic certificates, by the terminal device;
receiving the use condition from the authentication device, by the terminal device;
storing the use condition received, by the terminal device;
selecting an electronic certificate based on the use condition stored, by the terminal device;
receiving the electronic certificate selected from the authentication device, by the terminal device; and
performing an encryption communication using the electronic certificate received, by the terminal device.

The encryption communication method further includes:
outputting identification information for uniquely identifying the electronic certificate selected, by the terminal device;
making a user select the identification information output, by the terminal device; and
receiving an electronic certificate corresponding to the identification information that the user is made to select, from the authentication device, by the terminal device.

Further, a certificate providing method showing parts of the invention that uses an authentication device for storing an electronic certificate includes:
connecting to a terminal device for performing an encryption communication using an electronic certificate, by the authentication device;
storing one or more electronic certificates, by the authentication device;
storing a use condition for limiting a use of each of the one or more electronic certificates stored, by the authentication device;
transmitting the use condition stored to the terminal device, by the authentication device; and
transmitting the one or more electronic certificates stored to the terminal device, by the authentication device.

### Effect of the Invention

According to the present invention, it is possible to, at the time an application uses a user certificate, decrease the number of candidates for available certificates, and to reduce the burden of selecting a certificate for a user.

### Embodiments

It is hereinafter explained embodiments based on diagrams. The following first to fourth embodiments are explained by using a card such as an IC card, a memory card, a UIM as an example of an authentication device according to each embodiment; however, other authentication devices, such as a USB token are also applicable. Only embodiment 3 shows the invention. However, the other embodiments show parts of the invention and/or are useful for understanding the invention.

Further, the following first to fourth embodiments are explained by using an information terminal such as a mobile phone as an example of a terminal device according to each embodiment; however, other information terminals, such as a PDA (Personal Digital Assistant) and a personal computer are applicable.

### Embodiment 1.

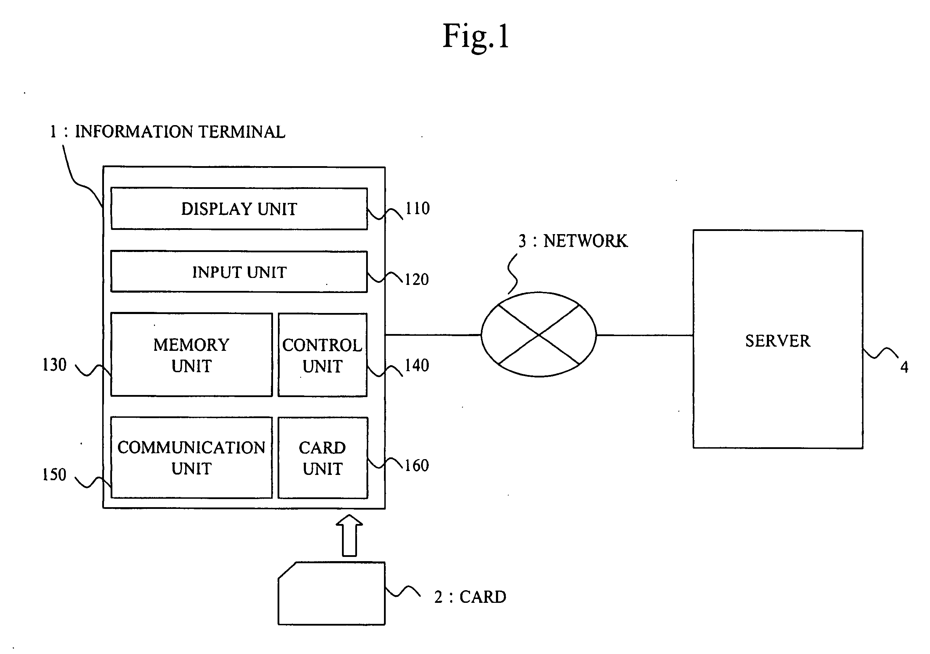

Fig. 1 is a block diagram describing a structure of an encryption communication system according to the present embodiment.

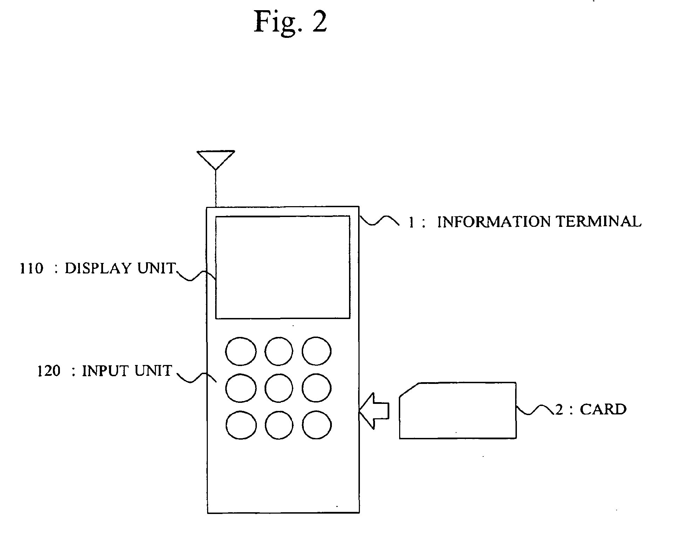

An information terminal 1 performs communication with a server 4 via a network 3. The information terminal 1 is so constructed that the card 2 is attachable to and detachable from the information terminal 1. The card 2 is an example of the authentication device here. The information terminal 1 includes a display unit 110 (output unit), an input unit 120, a memory unit 130 (use condition storing unit), a control unit 140 (including a certificate selecting unit), a communication unit 150, and a card unit 160 (consisting of an authentication device connecting unit, a use condition receiving unit and a certificate receiving unit). In the present embodiment an information terminal is described as but not limited to, for instance, a mobile phone as shown in Fig. 2.

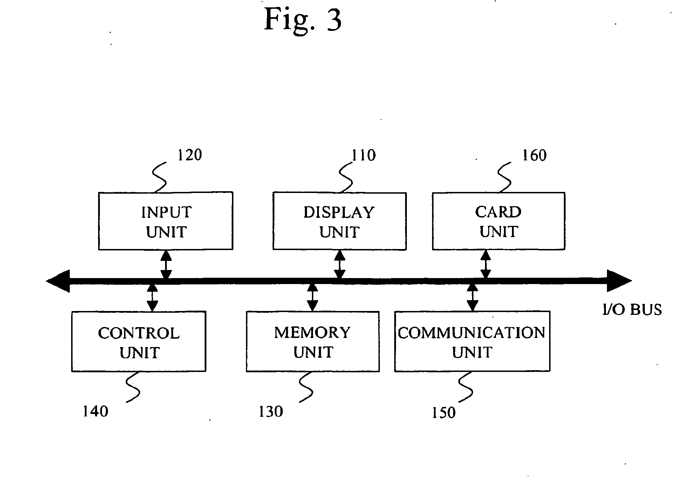

Fig. 3 is a block diagram describing a structure of the information terminal 1.

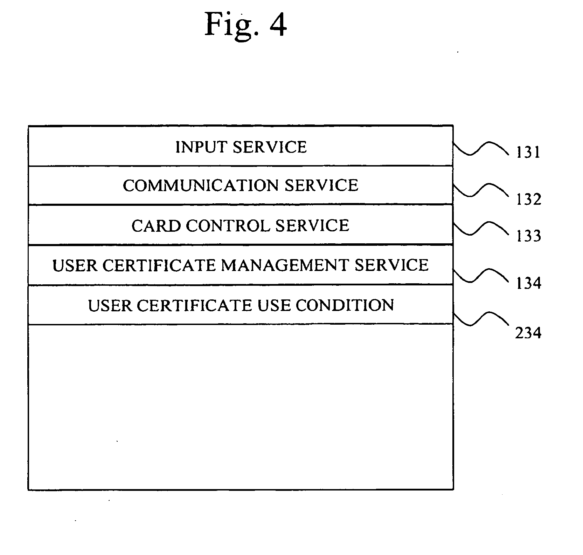

The control unit 140 loads a program and performs control over each unit in the information terminal 1. Further, the control unit 140 has functions of managing a user certificate and a use condition for the user certificate, and of limiting an available user certificate. As illustrated in Fig. 4, the memory unit 130 stores an input service 131 for performing input processing by a user, a communication service 132 for performing communication processing, a card control service 133 for performing control over the card 2, a user certificate management service 134 for selecting a user certificate, a user certificate use condition 234 holding a use condition for a user certificate received from the card 2, etc. Programs for each service are read out and executed by the control unit 140. The input unit 120 performs input of several kinds of directions, button input, character input, etc. The card unit 160 performs control over the card 2, such as an IC card or a UIM, attached to the information terminal 1. The display unit 110 performs display of input information and output information. The communication unit 150 performs wireless or wired communication processing.

The network 3 describes a network such as the Internet. The server 4 is a device like a web server performing processing and responding a result in response to a processing request from the information terminal 1 via the network 3.

The card 2 is a card, such as an IC card and a UIM, holding a user certificate and a private key for a public key encryption method such as RSA (Rivest Shamir Adleman), and having an encryption processing function by the private key.

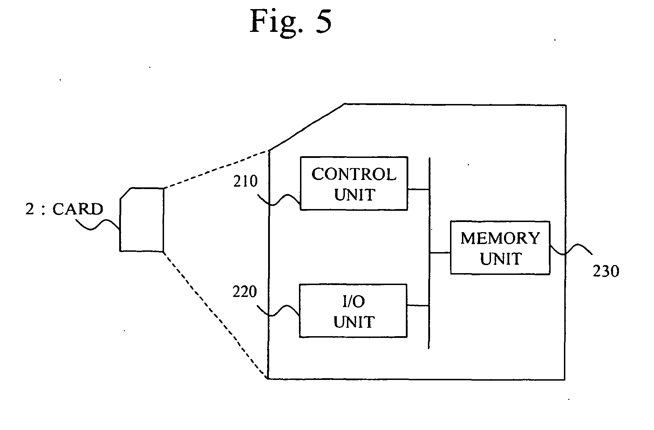

As shown in Fig. 5, the card 2 has a control unit 210, an I/O unit 220 (consisting of a terminal device connecting unit, a use condition transmitting unit and a certificate transmitting unit), and a memory unit 230 (consisting of a certificate storing unit and a use condition storing unit).

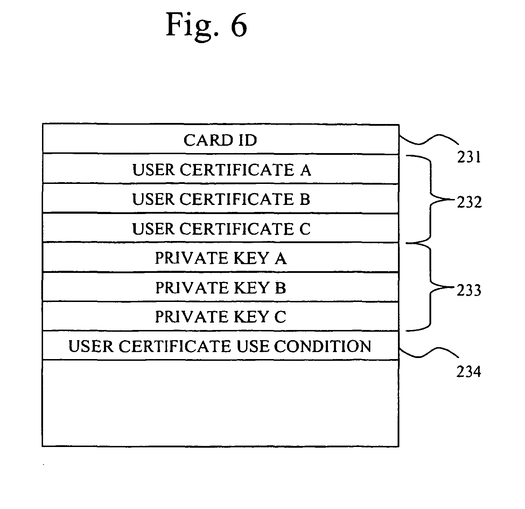

In the card 2, the control unit 210 performs interpretation and execution of commands transmitted to the card 2. The I/O unit 220 connects with various kinds of connection equipment (the information terminal 1 in the present embodiment). As shown in Fig. 6, the memory unit 230 stores a user certificate use condition 234 in addition to a card ID 231 for uniquely identifying the card 2, a user certificate group 232 consisting of one or more user certificates and a private key group 233 consisting of private keys corresponding to each of the user certificates. In Fig. 6, three user certificates and private keys corresponding to each of the user certificates are included; however, a case where different number of them are included is also applicable to the present embodiment.

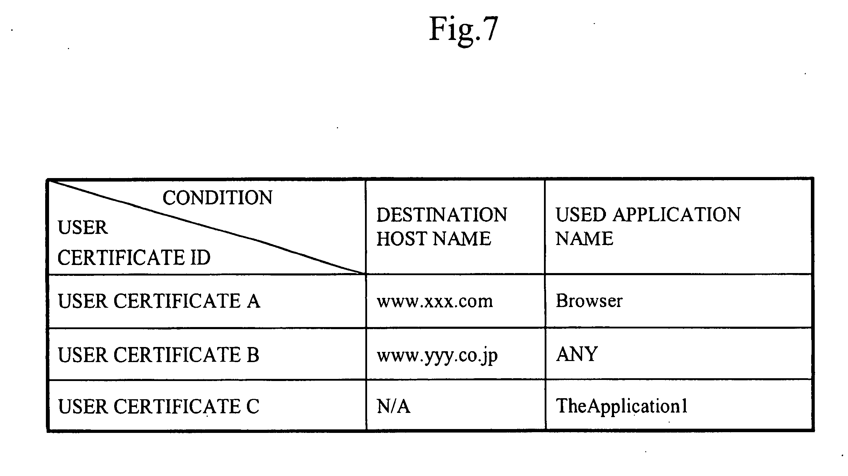

The details of the user certificate use condition 234 are described in Fig. 7.

The user certificate use condition 234 consists of a user certificate ID for uniquely identifying a user certificate contained in a card, an item of a condition at the time a user certificate is used (a destination host name and a used application name are listed in the present embodiment; however it is not intended to be exhaustive), and a value set to each item (hereinafter called a condition value). In the example in Fig. 7, what the user certificate used condition 234 indicates is as follows.

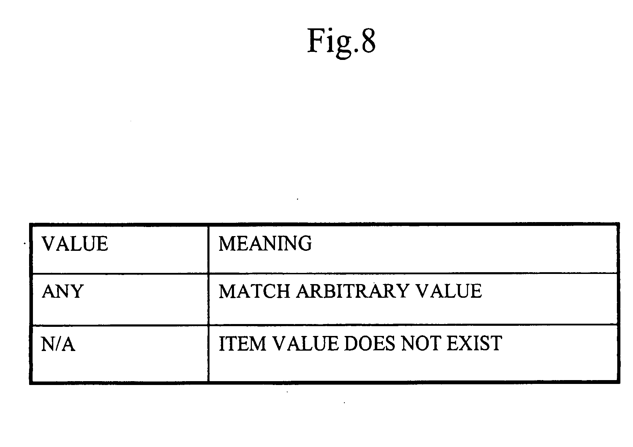

Three user certificates holding user certificate IDs of user certificates A, B and C exist in the card 2. The user certificate A can be used when the destination host name is "www.xxx.com," and the used application name is "Browser." The user certificate B can be used when the destination host name is "www.yyy.co.jp," and the used application name is an arbitrary name. The user certificate C can be used when the destination host name is undesignated, and the used application name is "TheApplication1." The destination host name is undesignated in an application when the destination host does not exist, such as in a case of using (a private key corresponding to) a user certificate for a signature of an electronic mail. In Fig. 8, for instance, ANY as a condition value to be used in the user certificate use condition 234 means arbitrary. In addition, N/A means undesignated likewise.

Next, it is explained in detail operations of the information terminal 1, the card 2, the network 3 and the server 4 according to the present embodiment as constructed as above. In the present embodiment, selecting processing of a user certificate in client authentication in SSL (Secure Socket Layer) is described; however, it is also applicable to any encryption processing systems for performing selecting processing of one user certificate to be used from a plurality of user certificates that are held.

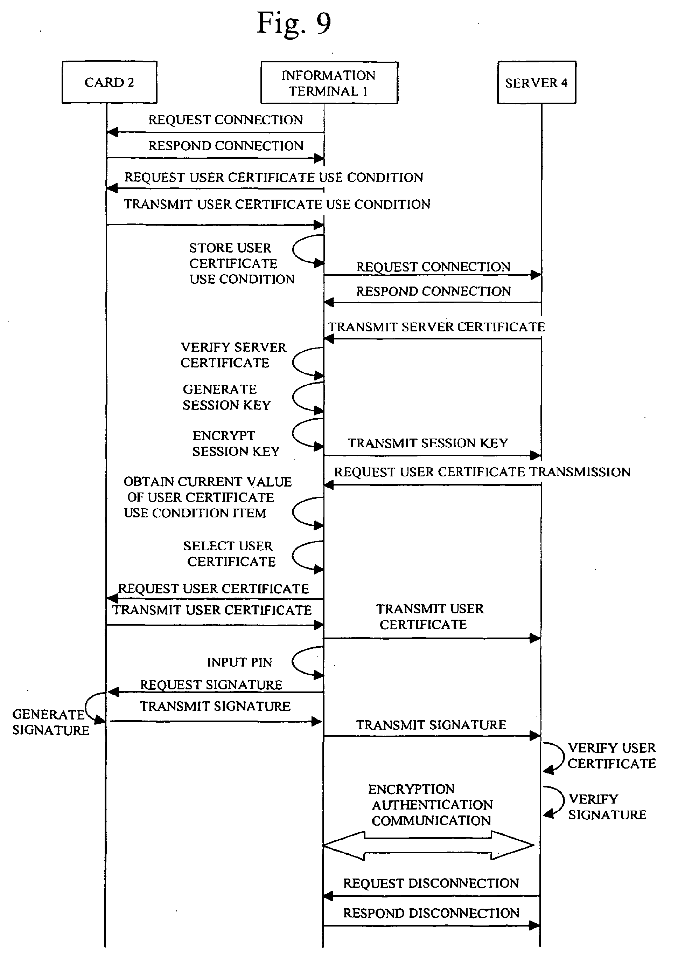

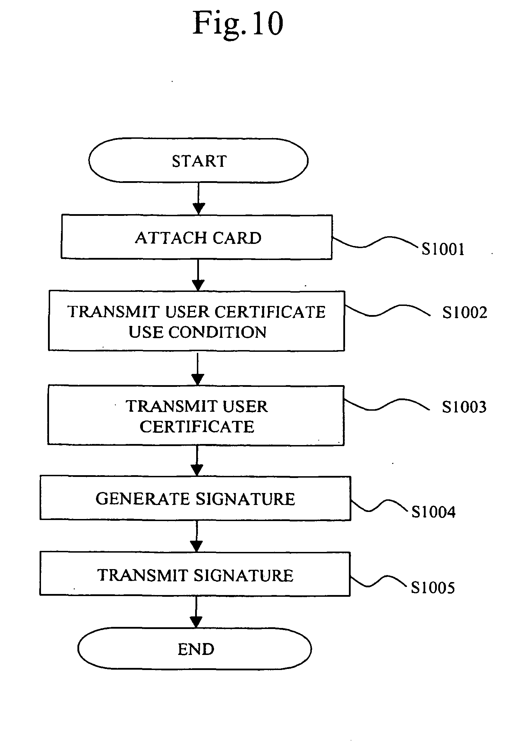

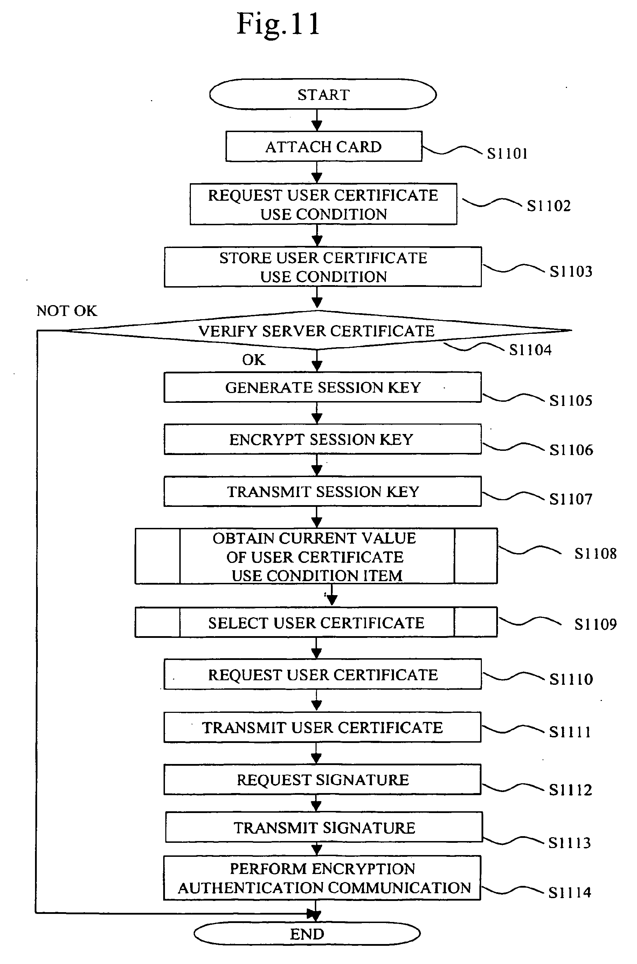

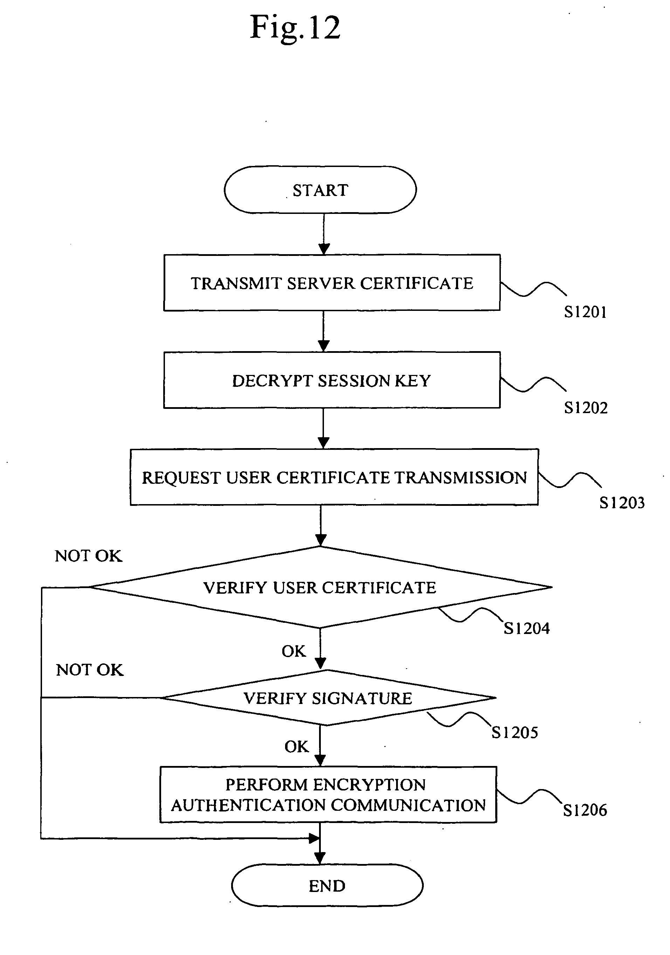

Fig. 9 is a message sequence diagram describing a sequence of operations of an encryption authentication communication including selecting processing of a user certificate. Fig. 10, Fig. 11 and Fig. 12 are flow diagrams describing flows of the processing of the card 2, the information terminal 1 and the server 4 respectively, in the sequence of operations of the encryption authentication communication including selecting processing of a user certificate.

When the card 2 is attached to the information terminal 1 (Step S1001 and Step S1101), the information terminal 1 establishes a communication channel with the card 2, and requests transmission of the user certificate use condition 234 to the card 2 (Step S1102). The card 2 transmits the user certificate use condition 234 to the information terminal 1 (Step S1002). The information terminal 1, when receiving the user certificate use condition 234, stores the user certificate use condition 234 in the memory unit 130 (Step S 1103).

The information terminal 1 establishes a communication channel with the server 4. The server 4 then transmits a server certificate to the information terminal 1 (Step S1201). The information terminal 1 verifies the received server certificate (Step S1104), and when the verification results in OK (the validity of the server certificate has been confirmed), generates a session key (Step S1105). Next, the information terminal 1 encrypts the session key with a public key contained in the server certificate (Step S 1106), and transmits the encrypted session key, which can be decrypted only by the server 4, to the server 4 (Step S1107). The server 4, when receiving the encrypted session key, decrypts the encrypted session key with a private key of the server (Step S1202). At this point, the information terminal 1 and the server 4 share the session key securely.

Next, the server 4 performs authentication of the information terminal 1. First, the server 4 transmits a transmission request of a user certificate to the information terminal 1 (Step S1203). The information terminal 1 having received the transmission request of the user certificate, obtains values (hereinafter called a current value) corresponding to condition items of the user certificate use condition 234, "destination host name" and "used application name" in an encryption communication it is about to perform, so as to select one certificate to transmit from four user certificates it currently possesses (Step S1108).

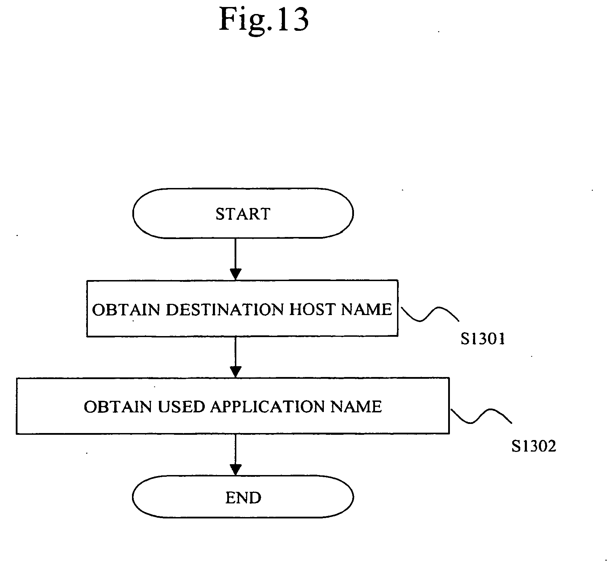

Fig. 13 is a flow diagram describing acquisition processing of a current value of the user certificate use condition 234 performed by the information terminal 1.

It is here assumed that a browser is trying to access the URL "https://www.xxx.com/index.htm." If the contents of the user certificate use condition 234 are as shown in Fig. 7, the browser specifies that "destination host name" is "www.xxx.com" (Step S1301), and next specifies that "used application" is "Browser" (Step S 1302).

Next, the control unit 140 of the information terminal 1 reads out the user certificate management service 134 from the memory unit 130, and performs selecting processing of a user certificate as shown below (Step S 1109).

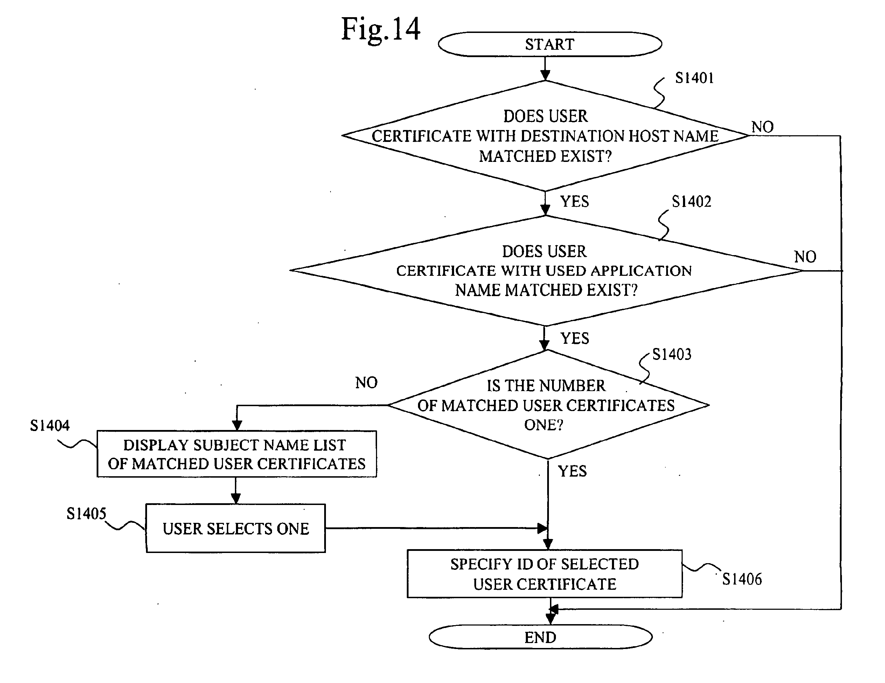

Fig. 14 is a flow diagram describing selecting processing of a user certificate performed by the information terminal 1.

The control unit 140 specifies from the user certificate use condition 234 a user certificate whose "destination host name" is "www.xxx.com" and "used application" is "Browser," and outputs its user certificate ID. In detail, as shown in Fig. 14, the control unit 140 searches if there exists a certificate matching a current value of the destination host name in the user certificate use condition 234 (Step S1401). If a plurality of certificates match, it is determined whether the current value of the used application name matches a condition for each certificate (Step S1402). In this case, if a plurality of user certificates match (Step S1403), the display unit 110 presents subject names (names of holders), etc. of the matching user certificates to a user (Step S1404), and makes the user select one by the input unit 120 (Step S1405). Then, as a result, one user certificate is selected (Step S1406). In the example in Fig. 7, the user certificate A is selected.

Next, the information terminal 1 requests transmission of the user certificate A to the card 2 (Step S1110). The card 2 transmits the user certificate A to the information terminal 1 (Step S1003). The information terminal 1, upon receipt of the user certificate A, transmits the user certificate to the server 4 (Step S1111). Further, the information terminal 1 requests transmission of a signature to the card 2 (Step S1112). The card 2 performs generation of a signature using a private key corresponding to the user certificate A (Step S1004), and transmits the signature to the information terminal 1 (Step S1005). The information terminal 1 transmits the signature received from the card 2 to the server 4 (Step S1113). The server 4 verifies the transmitted user certificate (Step S1204). When the verification results in OK (the validity of the user certificate has been confirmed), the server 4 performs verification of the transmitted signature by using a public key contained in the user certificate (Step S1205). If the verification of the signature results in OK (the validity of the signature has been confirmed), then the server 4 succeeds in authenticating the information terminal 1 being a communication peer as a valid communication peer. After that, the information terminal 1 and the server 4, using the session key shared with each other securely, performs an encryption authentication communication, wherein eavesdropping, tampering and impersonation are prevented (Step S 1114 and Step S 1206).

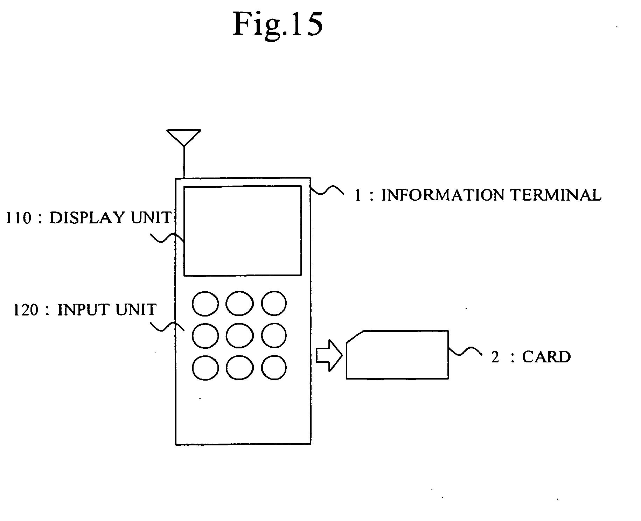

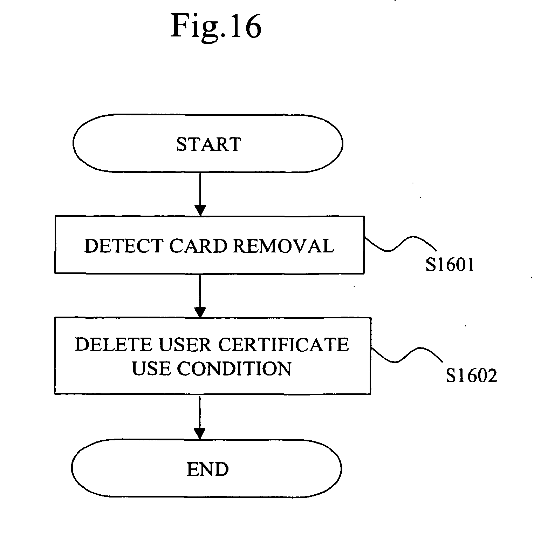

When the card 2 is removed from the information terminal 1, the user certificate use condition 234 held in the memory unit 130 of the information terminal 1 is deleted. Fig. 15 is a diagram of an image of the card 2 being removed from the information terminal 1, and Fig. 16 is a flow diagram describing processing in a case wherein the card 2 is removed from the information terminal 1. A flow of processing of when the card 2 is removed from the information terminal 1 is described below by using Fig. 16.

When the card 2 is removed from the information terminal 1, removal of the card 2 is notified to the control unit 140 from the card unit 160 (Step S1601). Then, a program of the user certificate management service 134 is loaded into the control unit 140, to delete the user certificate use condition 234 held in the memory unit 130 (Step S1 602).

As shown above, in the present embodiment, the card 2 stores a user certificate and the user certificate use condition 234, and information of them is held in the memory unit 130 of the information terminal 1. Then, by a procedure of obtaining a current value of an item in the user certificate use condition 234 at the information terminal 1, and selecting a user certificate whose condition value of the item matches the current value, it is possible to automatically select an available user certificate from among a plurality of user certificates. As a result, the trouble of a user to determine and select an available user certificate is reduced. Additionally, when the card 2 is removed from the information terminal 1, the user certificate use condition 234 of the information terminal 1 is deleted, so that when a request for using a user certificate occurs after that, it is possible to determine that an available certificate does not exist only by checking the user certificate use condition list 135 of the memory unit 130 without needing processing of the card unit 160.

### Embodiment 2.

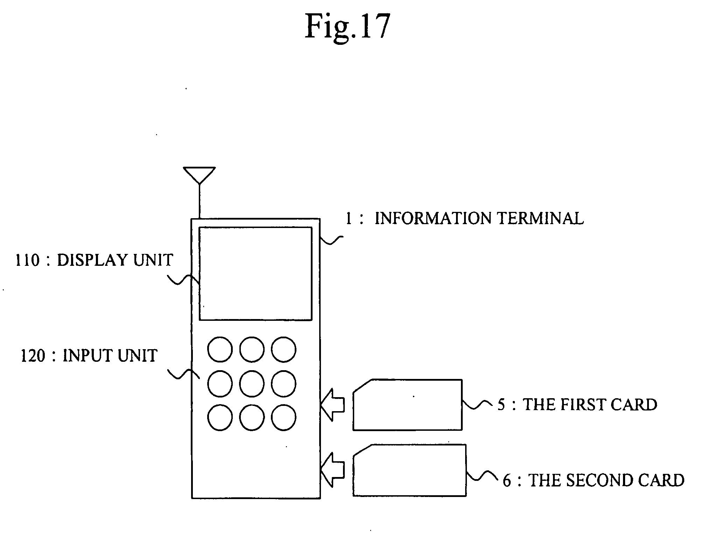

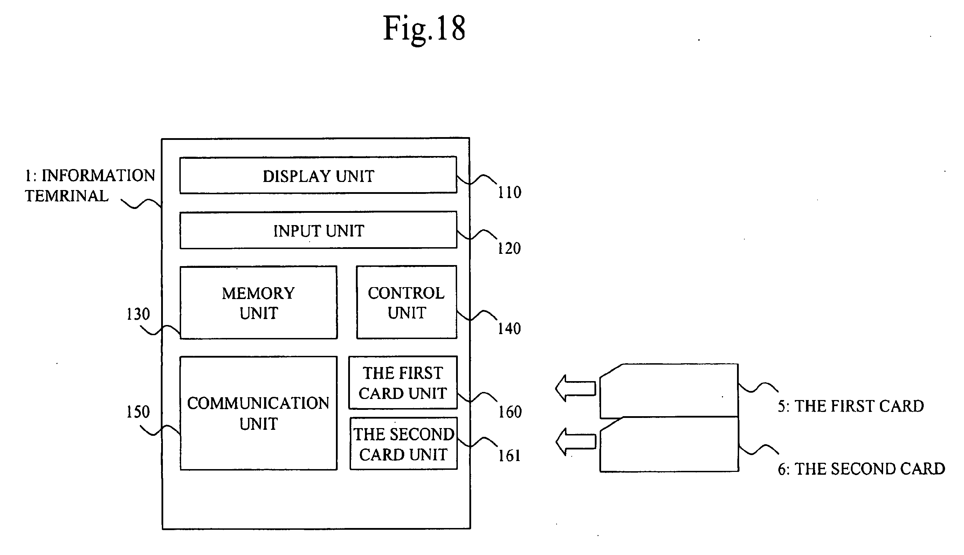

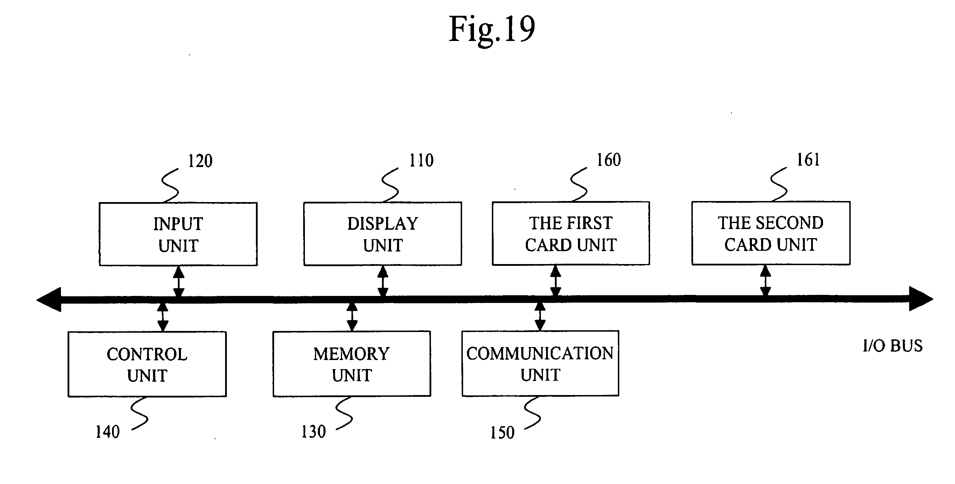

In the present embodiment, two pieces of cards are attached to the information terminal 1 as shown in Fig. 17. Configuration of each card is the same as shown in Fig. 5 and Fig. 6 of the first embodiment. The second card unit 161 is added to the configuration of the information terminal 1 as shown in Fig. 18 and Fig. 19. Further, to differentiate the card unit 160 according to the first embodiment from the second card unit 161, the card unit 160 is referred to as the first card unit 160.

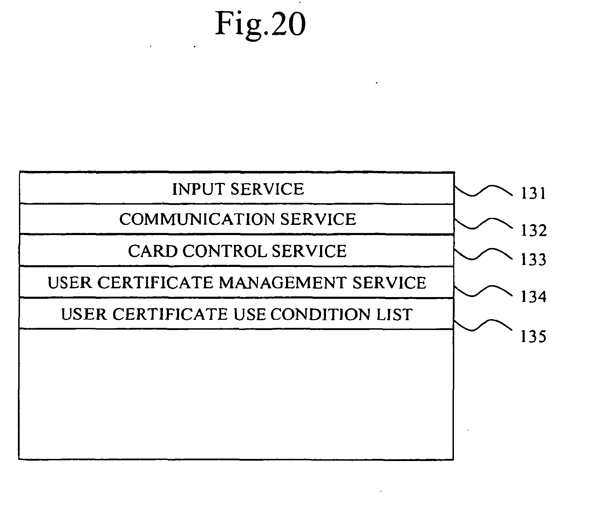

When attaching the first card 5 and the second card 6, it is necessary to store user certificate use conditions 234 of each card in the information terminal 1. Therefore, the information terminal 1 holds in the memory unit 130 a user certificate use condition list 135 including a plurality of user certificate use conditions 234 as shown in Fig. 20.

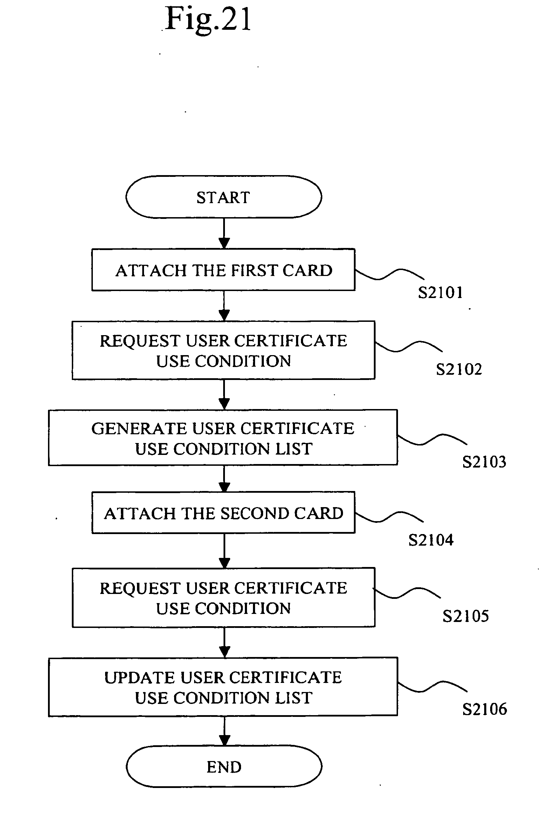

Fig. 21 is a flow diagram describing a flow of processing wherein user certificate use conditions 234 are added to the user certificate use condition list 135 at the time of attaching the first card 5 and the second card 6.

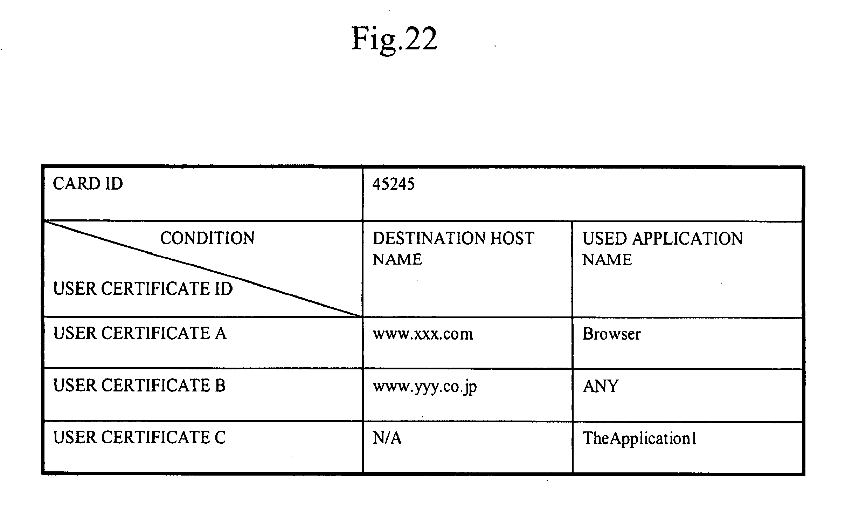

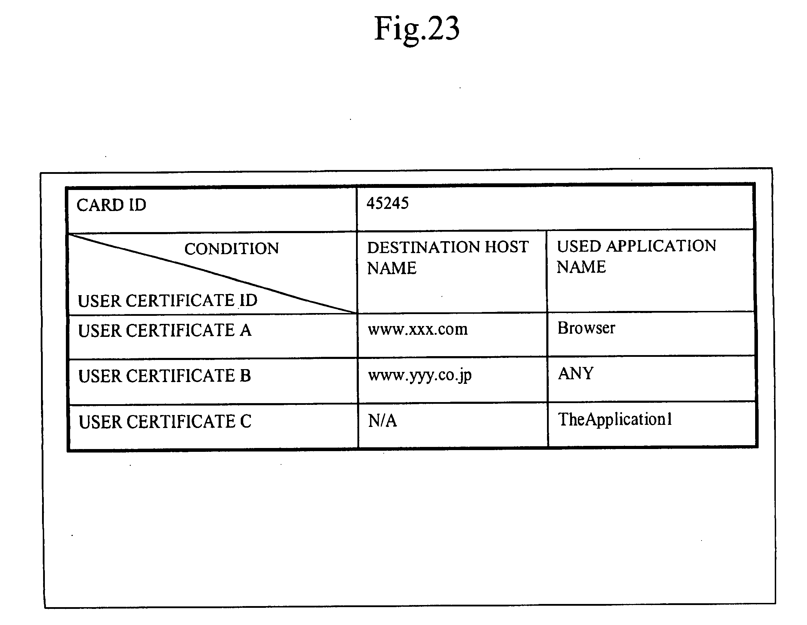

When the first card 5 is attached to the information terminal 1 (Step S2101), the information terminal 1 establishes a communication channel with the first card 5, and requests transmission of a user certificate use condition 234 to the first card 5 (Step S2102). The first card 5 combines the user certificate use condition 234 with a card ID 231, and transmits them to the information terminal 1. Fig. 22 describes information of combination of the user certificate use condition 234 and the card ID 231 transmitted by the first card 5. The information terminal 1, upon receipt of the user certificate use condition 234 and the card ID 231, by using them as one element as shown in Fig. 23, generates the user certificate use condition list 135 (Step S2103).

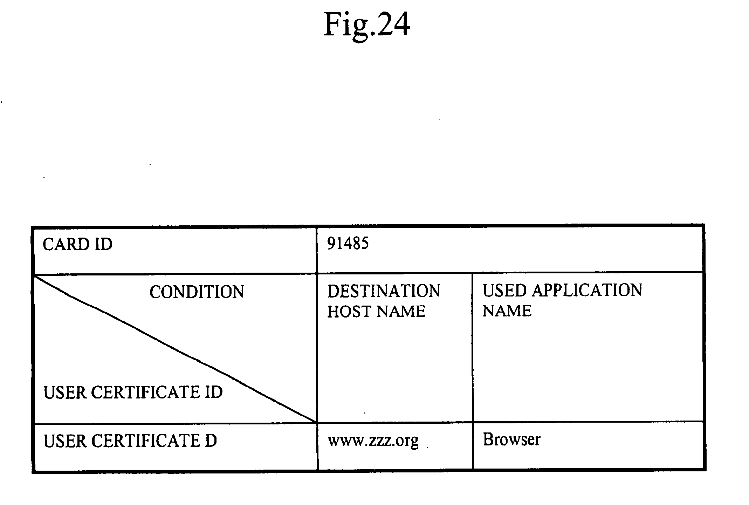

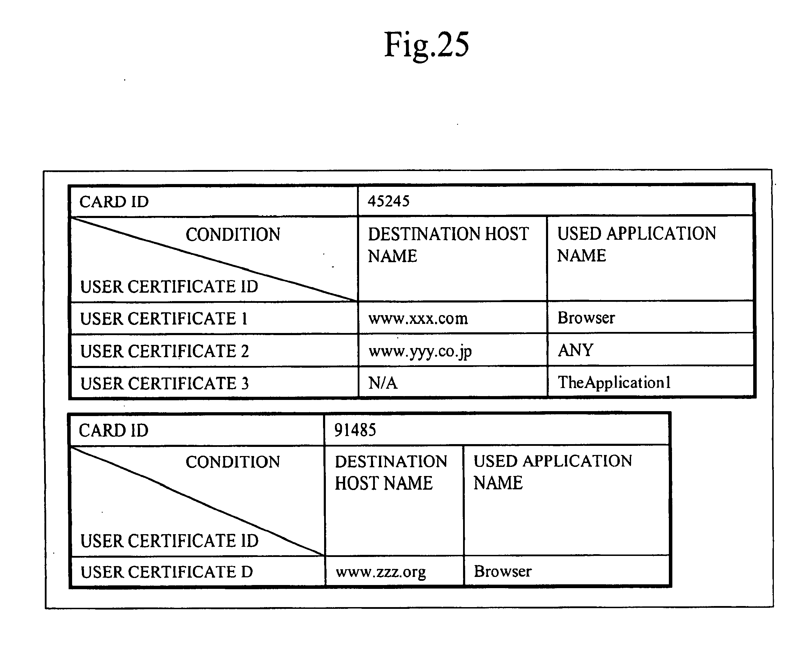

When the second card 6 is attached to the information terminal 1 (Step S2104), the information terminal 1 establishes a communication channel with the second card 6, and requests transmission of a user certificate use condition 234 to the second card 6 (Step S2105). The second card 6 combines the user certificate use condition 234 and the card ID 231 and transmits them to the information terminal 1. Fig. 24 describes information of combination of the user certificate use condition 234 and the card ID transmitted by the second card 6. The information terminal 1, upon receipt of the user certificate use condition 234 and the card ID 231, by using them as one element as shown in Fig. 25, updates the user certificate use condition list 135 (Step S2106).

When it becomes necessary to select a user certificate in a state wherein the information terminal 1 holds the user certificate use condition list 135 as shown in Fig. 25, a current value of an item in the user certificate use condition 234 is obtained, and a user certificate of which a condition value matches the current value is selected, in the same way as in the first embodiment. When there exists a user certificate holding a user certificate use condition 234 matching the current value, an ID of the user certificate is output. For example, when a browser accesses "https://www.zzz.org/index.html" and SSL client authentication occurs thereby, the current value of the item in the user certificate use condition 234 "destination host name" is "www.zzz.org," and "used application name" is "Browser." Then, by searching the user certificate use condition list 135 for a user certificate having condition values matching these current values, "user certificate D" is matched and output. When the information terminal 1 obtains the user certificate D, the user certificate management service 134 specifies from the user certificate condition list 135 that an ID of a card holding the user certificate D is 91485, establishes a communication channel with the card with the card ID "91485," namely, the second card 6, and obtains a certificate whose certificate ID is the user certificate D. Then, it is returned to an application.

When a card is removed, as in the first embodiment, the information terminal 1 obtains the card ID 231 of the removed card, and deletes the user certificate use condition 234 in the user certificate use condition list 135 corresponding to the card ID 231.

As shown above, in the present embodiment, even when two pieces of cards are attached to the information terminal 1, the information terminal 1 has the user certificate use condition list 135 that can hold the user certificate use conditions 234 stored in each card. The information terminal 1 can obtain a user certificate ID whose condition value matches a current value of an item in a user certificate use condition 234, from the user certificate use condition list 135. Therefore, the trouble of a user to determine and select an available user certificate is reduced.

An example of the information terminal 1 whereto two pieces of cards are attachable simultaneously is described in the present embodiment. Even in a case of the information terminal 1 whereto N pieces (where N is an integer equal to or greater than two) of cards are attachable simultaneously, a selecting procedure of a user certificate is the same except that the number of elements of user certificate use conditions 234 included in the user certificate use condition list 135 is N.

### Embodiment 3 showing the essential aspects of the invention:

In the present embodiment, it is described a system wherein the information terminal 1 is so constructed that two pieces of cards can be attached, and even if one piece of them (assumed as an old type card) does not hold a user certificate use condition 234, a user certificate of the old type card is included in candidates for selection.

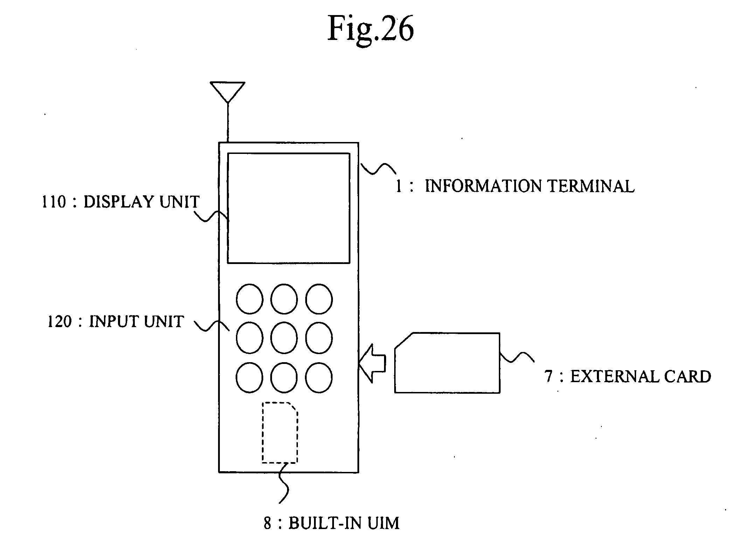

In the present embodiment, a UIM (built-in UIM 8) built into a mobile phone is used as an example of the old type card, as shown in Fig. 26. Further, an IC card (external card 7) attachable to a memory card interface is used as an example of a card holding a user certificate use condition 234.

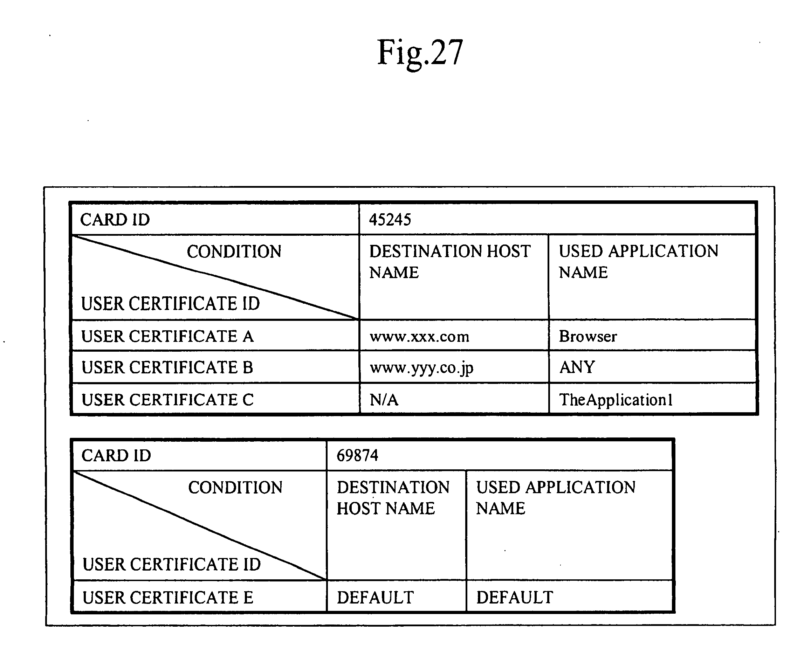

The information terminal 1 requests acquisition of a user certificate use condition 234 to the built-in UIM 8 after acquiring a user certificate use condition 234 from the external card 7. The built-in UIM 8 cannot interpret the acquisition request of a certificate use condition received from the information terminal 1, and returns error. The information terminal 1 determines that the built-in UIM 8 is an old type card which does not hold a user certificate use condition 234, and requests to the built-in UIM 8 transmission only of a card ID 231 and a user certificate ID held by the built-in UIM 8. Then, the built-in UIM 8 returns a card ID "69874" and a user certificate ID "user certificate E" it holds. Based on the information, the information terminal 1 sets condition values of "destination host name" and "used application name," which cannot be obtained, to "DEFAULT," as shown in Fig. 27. It is assumed that "DEFAULT" matches any current values except N/A. Meantime, only "DEFAULT" matches a current value "DEFAULT."

As shown above, in the present embodiment, "DEFAULT" is added to a condition value of an item in a user certificate use condition 234, so that in a case of an application which is in advance known to use a user certificate of a card not supporting a user certificate use condition 234, it is possible to set "DEFAULT" to a current value of an item in a user certificate use condition 234, and to exclude a user certificate of a card holding a user certificate use condition 234 from a selection object. Further, to the contrary, it is possible to prevent a user certificate of a card not holding a user certificate use condition 234 from being excluded from a selection object, even when a card holding a user certificate use condition 234 is attached.

### Embodiment 4.

In the present embodiment, it is possible to add a condition item and a condition value transmitted from the server 4 to a user certificate use condition list 135 held by the information terminal 1.

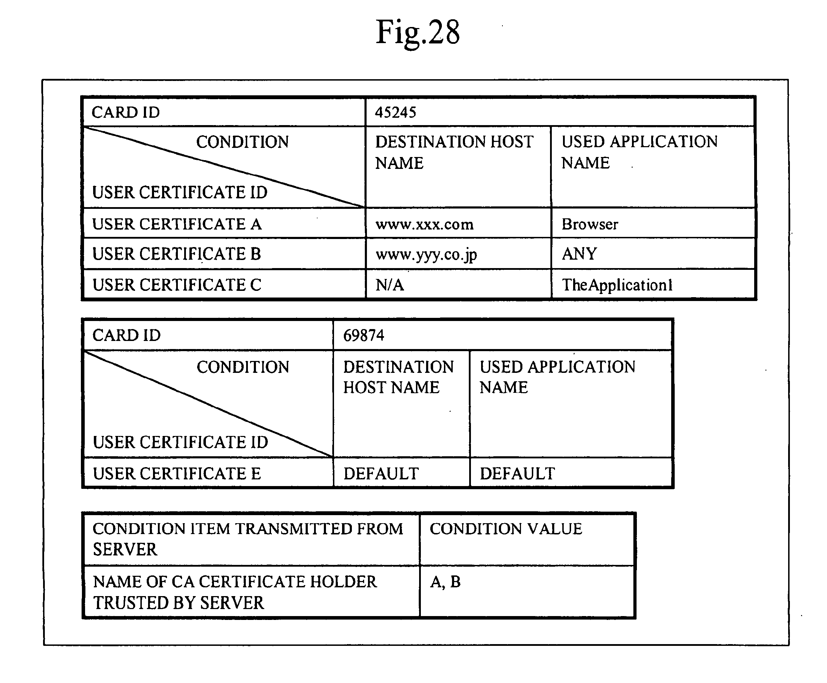

The information terminal 1 holds a user certificate use condition list 135 as shown in Fig. 27. First, the server 4 notifies an application operating in the information terminal 1 that a name of a holder of a CA certificate issued by a certificate issuing authority (CA, Certificate Authority) trusted by the server 4 is A or B. Then, the application adds to the user certificate use condition list 135 an item "name of CA certificate holder trusted by server 4" together with a condition value "A, B" (A or B) as shown in Fig. 28.

After specifying a user certificate matching the user certificate use condition 234 acquired from the card 2, the application determines if a superior CA certificate of the matching user certificate is A or B, and sets a user certificate passed the determination as a user certificate to be used. Then, after the user certificate to be used is specified, the information terminal 1 deletes from the user certificate use condition list 135 the condition item and the condition value sent from the server 4.

As shown above, in the present embodiment, a user certificate matching a condition transmitted from the server is further selected from among user certificates matching a user certificate use condition 234 acquired from a card. Therefore, an available user certificate is limited further in comparison to other embodiments, and the trouble of a user to determine an available user certificate is reduced.

The information terminal 1 and the server 4 in each of the aforementioned embodiments can be realized by a computer.
The information terminal 1 and the server 4 have a CPU (Central Processing Unit) to execute a program, although it is not illustrated in diagrams.

A CPU connects to, for instance, a ROM (Read Only Memory), a RAM (Random Access Memory), a communication board, a display device, a K/B (keyboard), a mouse, a FDD (Flexible Disk Drive), a CDD (Compact Disk Drive), a magnetic disk drive, an optical disk drive, a printer device, a scanner device, etc., via a bus.
A RAM is one example of a volatile memory. A ROM, a FDD, a CDD, a magnetic disk drive, an optical disk drive are examples of a non-volatile memory. These are examples of a storage device or a memory unit.
Data and information treated by the information terminal 1 and the server 4 in each of the aforementioned embodiments is stored in a storage device or a memory unit, and recorded and read out by each unit of the information terminal 1 and the server 4.

In addition, the communication board connects to, for instance, a LAN, the Internet or a WAN (Wide Area Network) such as an ISDN.

The magnetic disk drive stores an operating system (OS), a window system, a program group, and a file group (database).
The program group is executed by a CPU, an OS and a window system.

A part or the whole of each unit of the information terminal 1 and the server 4 can be constructed by a program operable by a computer. Alternatively, they can be realized by firmware stored in a ROM. Alternatively, they can be implemented by software, hardware, or a combination of software, hardware and firmware.

The program group stores programs whereby a CPU executes processing described in the explanations of the embodiments as "... unit." These programs are created with computer languages, such as the C language, HTML, SGML or XML.

In addition, the programs are stored in a recording medium, such as a magnetic disk drive, a FD (Flexible Disk), an optical disk, a CD (Compact Disc), a MD (mini disc), a DVD (Digital Versatile Disk), and so on, and read out and executed by a CPU.

As shown above, an encryption system explained in the first embodiment consists of an information terminal and a card which is attachable to the information terminal and has a user certificate, a private key and an encryption function by the private key. The card holds a use condition for a user certificate stored in the card, and the information terminal has a means to detect attachment of the card. The encryption system includes a storing means to read out, at a time of detection of card attachment by the information terminal, a user certificate use condition from the card by the information terminal, and to store the user certificate use condition in the information terminal, a means to read out a current value of an item in the user certificate use condition by the information terminal, a means to determine if the current value read out matches a condition value, a means to specify an ID of a matching user certificate, a means to display IDs of a plurality of certificates matching the user certificate use condition, a means to select one ID from among the displayed IDs, a means to obtain a user certificate corresponding to the selected ID from the card, and a means to delete the user certificate use condition stored in the information terminal at a time the card is removed.

Further, in the encryption system, information of a destination system is indicated in a user certificate use condition held inside the card.

Further, in the encryption system, a host name is indicated as information of a destination system in a user certificate use condition held inside the card.

Further, in the encryption system, information of an application to be used is indicated in a user certificate use condition held inside the card.

Further, in the encryption system, an application name is indicated as information of an application to be used in a user certificate use condition held inside the card.

Furthermore, an encryption system explained in the second embodiment consists of an information terminal whereto a plurality of cards are attachable, and a plurality of cards which are attachable to the information terminal and have a user certificate, a private key and an encryption function by the private key. Each card holds a use condition for a user certificate stored in the card, and the information terminal has a means to detect attachment of a card. The encryption system includes a storing means to read out, at a time of detection of card attachment by the information terminal, a user certificate use condition from the attached card, and to store the user certificate use condition in the information terminal, a storing means to store, when a user certificate use condition is read out from the plurality of cards, all the plurality of user certificate use conditions into the information terminal, a means to read out a current value of an item in a user certificate use condition by the information terminal, a means to determine if the current value read out and a condition value match, a means to specify an ID of a matching user certificate, a means to display IDs of a plurality of certificates matching the user certificate use condition, a means to select one ID from among the displayed IDs, a means to obtain a user certificate corresponding to the selected ID from the card, and a means to delete, at a time a card is removed, a user certificate use condition corresponding to the removed card from the user certificate use condition stored in the information terminal.

An encryption system described in the third embodiment and the fourth embodiment consists of an information terminal whereto a plurality of cards are attachable, and a plurality of cards, which are attachable to the information terminal and have a user certificate, a private key and an encryption function by the private key. The plurality of cards consist of cards holding and not holding use conditions for user certificates stored in cards, and the information terminal has a means to detect attachment of a card. The encryption system includes, at a time of detection of card attachment by the information terminal, if an attached card holds a user certificate use condition, a storing means to read out the condition and to store the condition in the information terminal, and if the attached card does not hold a user certificate use condition, a means to generate a user certificate use condition whereto a condition value DEFAULT matching a current value of any user certificate use conditions is set, and to store the user certificate use condition in the information terminal, a means to read out the current value of the item in the user certificate use condition by the information terminal, a means to determine if the current value read out and a condition value match, a means to specify an ID of a matching user certificate, a means to display IDs of a plurality of certificates matching the user certificate use condition, a means to select one ID from among the displayed IDs, a means to obtain a user certificate corresponding to the selected ID from the card, and a means to delete, at a time a card is removed, a user certificate use condition corresponding to the removed card from the user certificate use condition stored in the information terminal.

Further, the encryption system includes a means to add a user certificate use condition transmitted from the server to a user certificate use condition held by the information terminal.

Further, in the encryption system, a name of a certificate issuing authority trusted by the server is indicated in a user certificate use condition transmitted from the server.

### Brief Description of the Drawings

[Fig. 1] A block diagram describing a structure of the encryption communication system according to the first embodiment.
[Fig. 2] An example of the information terminal and the card attached to the information terminal according to the first embodiment.
[Fig. 3] A block diagram describing a structure of the information terminal according to the first embodiment.
[Fig. 4] A schematic diagram describing a structure of the memory unit of the information terminal according to the first embodiment.
[Fig. 5] A block diagram describing a structure of the card according to the first embodiment.
[Fig. 6] A schematic diagram describing a structure of the memory unit of the card according to the first embodiment.
[Fig. 7] An example of the user certificate use condition according to the first embodiment.
[Fig. 8] An example of a set value of the user certificate use condition according to the first embodiment.
[Fig. 9] A sequence diagram describing processing performed by the card, the information terminal and the server according to the first embodiment.
[Fig. 10] A flow diagram describing processing performed by the card according to the first embodiment.
[Fig. 11] A flow diagram describing processing performed by the information terminal according to the first embodiment.
[Fig. 12] A flow diagram describing processing performed by the server according to the first embodiment.
[Fig. 13] A flow diagram describing acquisition processing of a current value of an item in the user certificate use condition performed by the information terminal according to the first embodiment.
[Fig. 14] A flow diagram describing user certificate selecting processing performed by the information terminal according to the first embodiment.
[Fig. 15] An example of the information terminal and the card removed from the information terminal according to the first embodiment.
[Fig. 16] A flow diagram describing processing to be performed by the information terminal at a time the card is removed according to the first embodiment.
[Fig. 17] An example of the information terminal and the card attached to the information terminal according to the second embodiment.
[Fig. 18] A block diagram describing a structure of a part of the encryption communication system according to the second embodiment.
[Fig. 19] A block diagram describing a structure of the information terminal according to the second embodiment.
[Fig. 20] A schematic diagram describing a structure of the memory unit of the information terminal according to the second embodiment.
[Fig. 21] A flow diagram describing processing performed by the information terminal according to the second embodiment.
[Fig. 22] An example of information transmitted from the first card to the information terminal according to the second embodiment.
[Fig. 23] An example of the user certificate use condition list according to the second embodiment (immediately after information is obtained from the first card).
[Fig. 24] An example of information transmitted from the second card to the information terminal according to the second embodiment.
[Fig. 25] An example of the user certificate use condition list according to the second embodiment (immediately after information is obtained from the second card).
[Fig. 26] An example of the information terminal and the card attached to the information terminal according to the third embodiment.
[Fig. 27] An example of the user certificate use condition list according to the fourth embodiment (immediately after information is obtained from two pieces of the cards).
[Fig. 28] An example of the user certificate use condition list according to the fourth embodiment (immediately after information is obtained from the server).

### Description of the Reference Numerals

1: Information terminal, 2: Card, 3: Network, 4: Server, 5: The first card, 6: The second card, 7: External card, 8: Built-in UIM, 110: Display unit, 120: Input unit, 130: Memory unit, 131: Input service, 132: Communication service, 133: Card control service, 134: User certificate management service, 135: User certificate use condition list, 140: Control unit, 150: Communication unit, 160: Card unit, 210: Control unit, 220: I/O unit, 230: Memory unit, 231: Card ID, 232: User certificate group, 233: Private key group, 234: User certificate use condition.

## Claims

1. A terminal device (1) for performing an encryption communication using an electronic certificate, the terminal device comprising:
• an authentication device connecting unit (160) adapted to connect to a first authentication
device (7) storing one or more electronic certificates (232) and a use condition (234) including, for each of the one or more electronic certificates, identification information for uniquely identifying the electronic certificate and a condition value of a condition item for determining whether to use the electronic certificate, where the condition value is determined as matching a current value of the condition item when the current value is the condition value, and to connect to a second authentication device (8) storing a further electronic certificate and further identification information for uniquely identifying said further electronic certificate but no use condition;
• a use condition receiving unit (160) adapted to receive the use condition from the first authentication device, whereto the authentication device connecting unit connects, and to receive no use condition from the second authentication device, whereto the authentication device connecting unit connects;
• a use condition storing unit (130) adapted to, when the use condition is received by the use condition receiving unit from the first authentication device, store the received use condition, and to, when no use condition is received by the use condition receiving unit from the second authentication device, store a predetermined use condition including the further identication information and a condition value of the condition item set to a default, where the default matches the current value except if the current value is undesignated;
• a certificate selecting unit (140) adapted to select the certificates with a condition value matching the current value based on the use condition stored in the use condition storing unit;
• an output unit (110) adapted to output, if a plurality of certificates has been selected by the certificate selecting unit (140), a list of identification information for uniquely identifying each of the electronic certificates selected by the certificate selecting unit;
• an input unit (120) adapted to make a user select identification information from the list of identification information output by the output unit;
• a certificate receiving unit (160) adapted to receive the electronic certificate, selected by the certificate selecting unit when the certificate selecting unit selects a single certificate and corresponding to the identification information selected by the user otherwise, from the authentication device storing said electronic certificate, whereto the authentication device connecting unit connects; and
• a communication unit (150) adapted to perform an encryption communication by using the electronic certificate received by the certificate receiving unit,
wherein the terminal device is adapted to establish a communication channel with a server (4), to share with the server a session key securely, to transmit the electronic certificate received by the certificate receiving unit to the server and, after a verification of the electronic certificate by the server, to perform the encryption communication with the server using the shared session key.

2. The terminal device of claim 1, wherein the condition item is information about a destination of the encryption communication performed by the communication unit.

3. The terminal device of claim 2, wherein at least a host name of the destination of the encryption communication is used as the information about the destination of the encryption communication performed by the communication unit.

4. The terminal device of claim 1, further comprising a control unit (140) to execute a program using the encryption communication performed by the communication unit, wherein the condition item is information about the program executed by the control unit.

5. The terminal device of claim 4, wherein at least a name of the program is used as the information about the program executed by the control unit.

## Patentansprüche

1. Endgerät (1) zum Durchführen einer verschlüsselten Kommunikation unter Verwendung eines elektronischen Zertifikats, wobei das Endgerät umfasst:
eine Authentifizierungsvorrichtungsverbindungseinheit (160), die dazu eingerichtet ist, sich mit einer ersten Authentifizierungsvorrichtung (7) zu verbinden, die ein oder mehrere elektronische Zertifikate (232) und eine Nutzungsbedingung (234) einschließlich, für jedes der ein oder mehreren elektronischen Zertifikate, Identifizierungsinformationen zum eindeutigen Identifizieren des elektronischen Zertifikats und eines Bedingungswerts eines Bedingungselements zum Bestimmen, ob das elektronische Zertifikat verwendet werden soll, speichert, wobei der Bedingungswert als einem aktuellen Wert des Bedingungselementes entsprechend bestimmt ist, wenn der aktuelle Wert der Bedingungswert ist, und sich mit einer zweiten Authentifizierungsvorrichtung (8) zu verbinden, die ein weiteres elektronisches Zertifikat und weitere Identifizierungsinformationen zum eindeutigen Identifizieren des besagten weiteren elektronischen Zertifikats, aber keine Nutzungsbedingung speichert;
eine Nutzungsbedingungsempfangseinheit (160), die eingerichtet ist, die Nutzungsbedingung von der ersten Authentifizierungsvorrichtung zu empfangen, mit der sich die Authentifizierungsvorrichtungsverbindungseinheit verbindet, und keine Nutzungsbedingung von der zweiten Authentifizierungsvorrichtung zu empfangen, mit der sich die Authentifizierungsvorrichtungsverbindungseinheit verbindet;
eine Nutzungsbedingungsspeichereinheit (130), die eingerichtet ist, wenn die Nutzungsbedingung von der Nutzungsbedingungsempfangseinheit von der ersten Authentifizierungsvorrichtung empfangen wird, die empfangene Nutzungsbedingung zu speichern, und, wenn keine Nutzungsbedingung durch die Nutzungsbedingungsempfangseinheit von der zweiten Authentifizierungsvorrichtung empfangen wird, eine vorbestimmte Nutzungsbedingung einschließlich der weiteren Identifizierungsinformationen und eines Bedingungswerts des Bedingungselements, das auf eine Standardeinstellung gesetzt ist, wobei die Standardeinstellung mit dem aktuellen Wert übereinstimmt, außer falls der aktuelle Wert unbestimmt ist, zu speichern;
eine Zertifikatauswahleinheit (140), die eingerichtet ist, die Zertifikate mit einem Bedingungswert, der mit dem aktuellen Wert übereinstimmt, basierend auf der Nutzungsbedingung, die in der Nutzungsbedingungsspeichereinheit gespeichert ist, auszuwählen;
eine Ausgabeeinheit (110), die eingerichtet ist, eine Liste von Identifizierungsinformationen zum eindeutigen Identifizieren jedes der elektronischen Zertifikate, die von der Zertifikatauswahleinheit ausgewählt werden, auszugeben, falls eine Mehrzahl von Zertifikaten von der Zertifikatauswahleinheit (140) ausgewählt worden ist;
eine Eingabeeinheit (120), die eingerichtet ist, einen Nutzer dazu zu bringen, Identifizierungsinformationen aus der Liste von Identifizierungsinformationen, die von der Ausgabeeinheit ausgegeben werden, auszuwählen;
eine Zertifikatempfangseinheit (160), die eingerichtet ist zum Empfang des elektronischen Zertifikats, das von der Zertifikatauswahleinheit ausgewählt wird, wenn die Zertifikatauswahleinheit ein einzelnes Zertifikat auswählt, und andernfalls den Identifizierungsinformationen, die von dem Nutzer ausgewählt werden, entspricht, von der Authentifizierungsvorrichtung, die das besagte elektronische Zertifikat speichert, mit der sich die Authentifizierungsvorrichtungsverbindungseinheit verbindet; und
eine Kommunikationseinheit (150), die eingerichtet ist, eine verschlüsselte Kommunikation unter Verwendung des elektronischen Zertifikats, das von der Zertifikatempfangseinheit empfangen wird, durchzuführen,
wobei das Endgerät eingerichtet ist, einen Kommunikationskanal mit einem Server (4) einzurichten, mit dem Server einen Sitzungsschlüssel sicher zu teilen, das elektronische Zertifikat, das von der Zertifikatempfangseinheit empfangen wird, an den Server zu übermitteln und, nach einer Verifizierung des elektronischen Zertifikats durch den Server, die verschlüsselte Kommunikation mit dem Server unter Verwendung des geteilten Sitzungsschlüssels durchzuführen.

2. Endgerät nach Anspruch 1, wobei das Bedingungselement eine Information über ein Ziel der verschlüsselten Kommunikation ist, die von der Kommunikationseinheit durchgeführt wird.

3. Endgerät nach Anspruch 2, wobei mindestens ein Host-Name des Ziels der verschlüsselten Kommunikation als die Information über das Ziel der verschlüsselten Kommunikation, die von der Kommunikationseinheit durchgeführt wird, verwendet wird.

4. Endgerät nach Anspruch 1, das weiter eine Steuereinheit (140) umfasst, um ein Programm unter Verwendung der verschlüsselten Kommunikation, die von der Kommunikationseinheit durchgeführt wird, auszuführen, wobei das Bedingungselement eine Informationen über das durch die Steuereinheit ausgeführte Programm ist.

5. Endgerät nach Anspruch 4, wobei mindestens ein Name des Programms als die Information über das von der Steuereinheit ausgeführte Programm verwendet wird.

## Revendications

1. Dispositif terminal (1) destiné à exécuter une communication chiffrée en utilisant un certificat électronique, le dispositif terminal comprenant :
- une unité de connexion de dispositif d'authentification (160) adaptée pour se connecter à un premier dispositif d'authentification (7) stockant un ou des certificats électroniques (232) et une condition d'utilisation (234) comprenant, pour chacun du ou des certificats électroniques, des informations d'identification destinées à identifier de manière unique le certificat électronique et une valeur de condition d'un élément de condition destiné à déterminer s'il convient d'utiliser le certificat électronique, dans lequel la valeur de condition est déterminée comme correspondant à une valeur actuelle de l'élément de condition lorsque la valeur actuelle est la valeur de condition, et à se connecter à un second dispositif d'authentification (8) stockant un autre certificat électronique et d'autres informations d'identification destinées à identifier de manière unique l'autre dit certificat électronique mais aucune condition d'utilisation ;
- une unité de réception de condition d'utilisation (160) adaptée pour recevoir la condition d'utilisation en provenance du premier dispositif d'authentification, auquel se connecte l'unité de connexion de dispositif d'authentification, et pour ne recevoir aucune condition d'utilisation en provenance du second dispositif d'authentification, auquel se connecte l'unité de connexion de dispositif d'authentification ;
- une unité de stockage de condition d'utilisation (130) adaptée pour stocker, lorsque la condition d'utilisation est reçue par l'unité de réception de condition d'utilisation en provenance du premier dispositif d'authentification, la condition d'utilisation reçue, et pour stocker, lorsqu'aucune condition d'utilisation n'est reçue par l'unité de réception de condition d'utilisation en provenance du second dispositif d'authentification, une condition d'utilisation prédéterminée comprenant les autres informations d'identification et une valeur de condition de l'élément de condition fixée à une valeur par défaut, où la valeur par défaut correspond à la valeur actuelle à moins que la valeur actuelle ne soit pas désignée ;
- une unité de sélection de certificat (140) adaptée pour sélectionner les certificats présentant une valeur de condition correspondant à la valeur actuelle sur la base de la condition d'utilisation stockée dans l'unité de stockage de condition d'utilisation ;
- une unité de sortie (110) adaptée pour délivrer en sortie, si une pluralité de certificats ont été sélectionnés par l'unité de sélection de certificat (140), une liste d'informations d'identification destinées à identifier de manière unique chacun des certificats électroniques sélectionnés par l'unité de sélection de certificat ;
- une unité d'entrée (120) adaptée pour faire sélectionner par un utilisateur des informations d'identification à partir de la liste d'informations d'identification délivrée en sortie par l'unité de sortie ;
- une unité de réception de certificat (160) adaptée pour recevoir le certificat électronique, sélectionné par l'unité de sélection de certificat lorsque l'unité de sélection de certificat sélectionne un seul certificat, et correspondant sinon aux informations d'identification sélectionnées par l'utilisateur, en provenance du dispositif d'authentification stockant ledit certificat électronique, auquel se connecte l'unité de connexion de dispositif d'authentification ; et
- une unité de communication (150) adaptée pour exécuter une communication chiffrée en utilisant le certificat électronique reçu par l'unité de réception de certificat ;
dans lequel le dispositif terminal est adapté pour établir un canal de communication avec un serveur (4), afin de partager de manière sécurisée avec le serveur une clé de session, pour transmettre au serveur le certificat électronique reçu par l'unité de réception de certificat et, après la vérification du certificat électronique par le serveur, pour exécuter la communication chiffrée, le serveur utilisant la clé de session partagée.

2. Dispositif terminal selon la revendication 1, dans lequel l'élément de condition représente des informations concernant la destination de la communication chiffrée exécutée par l'unité de communication.

3. Dispositif terminal selon la revendication 2, dans lequel au moins un nom d'hôte de la destination de la communication chiffrée est utilisé en tant qu'informations concernant la destination de la communication chiffrée exécutée par l'unité de communication.

4. Dispositif terminal selon la revendication 1, comprenant en outre une unité de commande (140) destinée à exécuter un programme utilisant la communication chiffrée exécutée par l'unité de communication, dans lequel l'élément de condition représente des informations concernant le programme exécuté par l'unité de commande.

5. Dispositif terminal selon la revendication 4, dans lequel au moins un nom du programme est utilisé en tant qu'informations concernant le programme exécuté par l'unité de commande.
